# FASCICULE DE BREVET EUROPEEN

(11) **EP 0 643 652 B1**
(45) Date de publication et mention de la délivrance du brevet: **11.09.1996**
(21) Numéro de dépôt: 93913061.3
(22) Date de dépôt: 25.05.1993
(51) Int. Cl.: B60T 13/573

(54) **SERVOMOTEUR PNEUMATIQUE**
PNEUMATISCHER HILFSKRAFTMOTOR
PNEUMATIC SERVOMOTOR

(30) Priorité: 26.05.1992 FR 9206398
(43) Date de publication de la demande: 22.03.1995
(73) Titulaire: ALLIEDSIGNAL EUROPE SERVICES TECHNIQUES, 93700 Drancy (FR)
(72) Inventeur: LEVRAI, Roland, F-93240 Stains (FR); CASTEL, Philippe, F-75005 Paris (FR); LE NORMAND, Pascal, F-93600 Aulnay-sous-Bois (FR)
(86) Numéro de dépôt international: FR9300501
(87) Numéro de publication internationale: WO9324352

(56) Documents cités:
- EP-A- 0 259 063
- EP-A- 0 341 101
- DE-A- 3 601 769
- US-A- 3 470 697
- US-A- 5 054 370
- PATENT ABSTRACTS OF JAPAN vol. 9, no. 60 (M-364)(1783) 16 Mars 1985, & JP-A-59 195 460 (RIZUMU JIDOUSHIYA BUHIN SEIZOU) 6 Novembre 1984

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire de la face avant d'un plongeur sur une première face d'un disque de réaction solidaire par une deuxième face d'une tige de poussée.

De tels servomoteurs, tels qu'illustrés par exemple par le document EP-A-0 101 658, présentent différents inconvénients. C'est ainsi par exemple que, en fonctionnement normal, c'est-à-dire en phase d'assistance, le plongeur commande le moyen de valve, ce dernier comportant un clapet coopérant par une partie active avec un premier siège de valve formé sur le plongeur et avec un second siège de valve formé sur le piston, de façon à admettre une certaine quantité d'air dans la chambre arrière, en fonction de l'effort exercé par le conducteur du véhicule sur la tige de commande. La différence des pressions exercées sur les deux faces de la jupe du piston engendre alors un effort d'assistance, lui aussi fonction de l'effort exercé sur la tige de commande.

Il arrive cependant un moment où l'effort de commande, encore appelé effort d'entrée, est suffisamment important pour que la pression dans la chambre arrière soit égale à la pression atmosphérique. Le servomoteur est alors en phase de saturation, c'est-à-dire que la différence de pression entre chambre arrière et chambre avant a atteint son maximum. Quel que soit l'effort exercé par le conducteur sur la tige de commande, cette différence de pression ne peut plus augmenter et la force d'assistance reste constante, et tout effort d'entrée supplémentaire se traduit par le même accroissement de l'effort de sortie sur la tige de poussée. Il y a donc un passage brusque entre la phase d'assistance et la phase de saturation, au cours duquel l'effort d'assistance, qui croissait linéairement avec l'effort d'entrée, devient constant. Ce passage d'une phase à l'autre se traduit pour le conducteur par une augmentation brusque de l'effort à fournir pour obtenir dans la phase de saturation la même augmentation de l'effort de sortie que pendant la phase d'assistance.

On connaît du document EP-A-0 259 063, un servomoteur pneumatique d'assistance au freinage, correspondant au préambule de la revendication principale. Un tel servomoteur comporte un élément élastique tel que des rondelles Belleville, disposé entre le moyeu du piston et un bouchon susceptible de coulisser dans ce moyeu et comportant le disque de réaction. Les rondelles Belleville s'écrasent pour une valeur de la force de commande prédéterminée, de sorte que la tige de commande du servomoteur vienne en butée contre un épaulement du moyeu du piston, pour inverser le fonctionnement du servomoteur et diminuer la force d'assistance à mesure que la force de commande augmente. Un tel servomoteur présente encore un passage brusque entre la phase d'assistance et la phase de saturation.

La présente invention a par conséquent pour objet de prévoir un servomoteur dont le fonctionnement ne présente pas de passage brusque de la phase d'assistance à la phase de saturation.

Selon l'invention, la face avant annulaire du piston est constituée par une rondelle élastique annulaire, en appui par son bord périphérique extérieur sur un épaulement du piston et sur le disque de réaction , et un élément élastique intermédiaire est disposé entre la face avant annulaire du piston et le plongeur.

D'autres buts, caractéristiques et avantages de la présente invention ressortiront de la description qui suit d'un mode de réalisation, donné à titre d'exemple non limitatif, en référence aux dessins annexés dans lesquels :
- la Figure 1 est une vue de côté, en coupe longitudinale représentant la partie centrale arrière d'un servomoteur pneumatique d'assistance au freinage de type connu, par exemple du document précité,
- la Figure 2 est une courbe représentant schématiquement l'évolution de la force Fs exercée sur la tige de poussée à la sortie du servomoteur en fonction de la force Fe exercée sur la tige de commande à l'entrée du servomoteur,
- la Figure 3 est une vue de côté en coupe longitudinale, représentant la partie centrale arrière d'un servomoteur pneumatique d'assistance au freinage selon un mode de réalisation de l'invention,
- la Figure 4 est une courbe représentant schématiquement l'évolution de la force Fs exercée sur la tige de poussée à la sortie du servomoteur de la Figure 3 en fonction de la force Fe exercée sur la tige de commande,
- la Figure 5 est une vue de côté en coupe longitudinale représentant une variante du mode de réalisation de la Figure 3,
- la Figure 6 est une vue de côté en coupe longitudinale représentant une variante du mode de réalisation de la Figure 3,
- les Figures 7 et 8 sont des vues en plan de ressorts utilisables dans le servomoteur illustré sur la Figure 6, et
- la Figure 9 est un réseau de courbes représentant schématiquement l'évolution de la force F_{S} exercée sur la tige de poussée à la sortie du servomoteur de la Figure 6 en fonction de la Force F_{E} exercée sur la tige de commande à l'entrée du servomoteur.

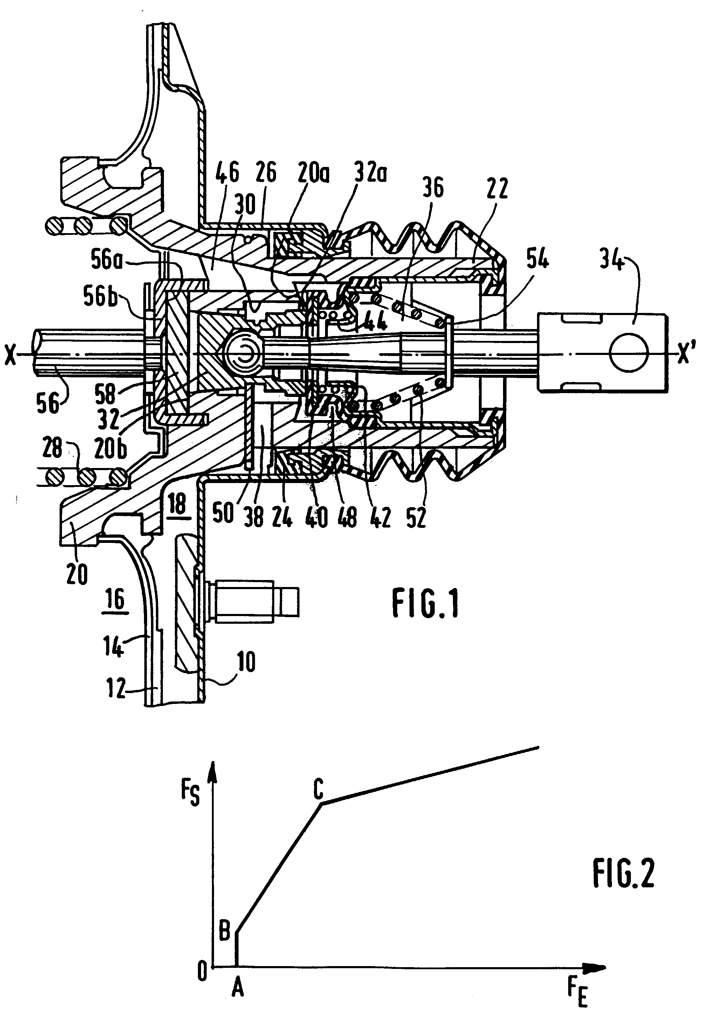

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X'. Seule la partie centrale arrière de cette enveloppe 10 est représentée sur la Figure 1.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X' du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure 1, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X'. L'extrémité avant d'une tige de commande 34 du servomoteur, disposée également selon l'axe X-X', est montée rotulante dans le plongeur 32. L'extrémité arrière de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X', pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure 1, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage 38.

D'une manière elle aussi classique, au moins un organe de butée 50 monté dans la partie centrale du piston 20 délimite la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière 56b d'une tige de poussée 56, au travers d'un disque de réaction 58 en un matériau déformable tel qu'un élastomère. De façon plus précise, la tige de poussée 56 et le disque de réaction 58 sont disposés selon l'axe X-X' du servomoteur, dans le prolongement de la tige de commande 34 et du plongeur 32. La surface arrière 56a de la tige de poussée 56 est formée sur une plaque en forme de disque 56b constituant l'extrémité arrière de la tige 56.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 52 diminué de l'effort de précontrainte du ressort 44. Au cours de ce léger déplacement de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans cette première phase de fonctionnement du servomoteur qui correspond au segment OA sur la Figure 2, la force exercée sur la tige de commande 34 n'engendre aucune force sur la tige de poussée 56 à la sortie du servomoteur.

Dans une deuxième phase de l'actionnement du frein, correspondant au segment AB sur la Figure 2, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère. Une force d'assistance est donc engendrée qui tend à déplacer le piston 20 vers l'avant. Ce déplacement est transmis à la tige de poussée 56 par le disque de réaction 48.

Au cours de cette deuxième phase d'actionnement des freins, la force d'assistance exercée par la face avant annulaire 20b du piston 20 déforme progressivement le disque de réaction 58 jusqu'à ce que ce dernier remplisse totalement l'espace qui sépare sa face arrière de la face avant du plongeur 32.

La force de sortie Fs appliquée au maître-cylindre par la tige de poussée augmente donc brutalement jusqu'à la valeur correspondant au point B sur la Figure 2, le segment AB représentant le saut du servomoteur.

Dans une troisième phase de l'actionnement du frein, qui correspond au segment BC sur la Figure 2, toute augmentation de l'effort d'entrée exercé par le conducteur sur la tige de commande 34 engendre une augmentation de la force d'assistance exercée sur le piston, qui se traduit par une augmentation de la réaction à la pédale exercée par le disque de réaction 58 sur le plongeur 32.

Au-delà du point C sur la Figure 2, encore appelé point de saturation, la pression régnant dans la chambre arrière 18 du servomoteur est égale à la pression atmosphérique et une augmentation de la pression d'assistance n'est plus possible. L'augmentation de la force de sortie exercée par la tige de poussée 56 sur le maître-cylindre est alors sensiblement égale à l'augmentation de la force exercée par le conducteur sur la pédale de frein. Comme on le voit sur la Figure 2, le passage de la phase assistée du servomoteur représentée par le segment BC à la phase non assistée représentée au-delà du point C est accompagné par un brusque changement des conditions dans lesquelles l'effort d'entrée est transformé en effort de sortie.

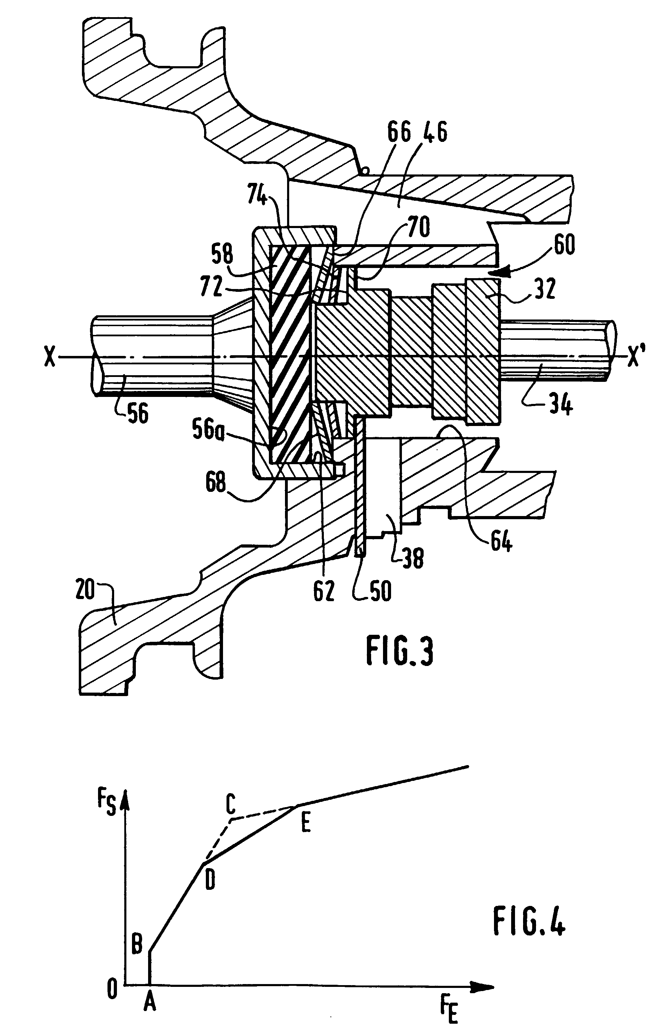

L'invention prévoit justement de rendre le passage du point de saturation plus progressif, grâce au dispositif représenté sur la Figure 3. Sur cette figure, les éléments identiques à ceux de la Figure 1 portent les mêmes numéros de référence.

On voit sur la Figure 3 que le plongeur 32 et le piston 20 ont été légèrement modifiés. Le piston 20 est formé avec un alésage étagé 60 comportant une partie avant 62 de plus grand diamètre et une partie arrière 64 de plus petit diamètre, définissant entre elles un épaulement 66. La partie avant 62 a le même diamètre que celui du disque de réaction. Une rondelle élastique annulaire 68, par exemple du type rondelle Belleville, est disposée dans la partie avant 62. Cette rondelle 68 présente au repos une forme tronconique d'un demi-angle au sommet donné, et dont la concavité est, dans l'exemple représenté, tournée vers l'arrière. Elle a un bord périphérique extérieur de diamètre égal à celui du disque de réaction 58 et de la partie avant 62, et un bord périphérique intérieur de diamètre légèrement supérieur à celui de la face avant du plongeur 32. Dans la position de repos du servomoteur représentée sur la Figure 3, où le plongeur 32 est en appui sur l'organe de butée 50, la rondelle 68 est en appui à la fois sur l'épaulement 66 et sur le disque de réaction 58.

Le plongeur 32 est formé avec une extension radiale 70 reçue à coulissement dans la partie arrière 64 de l'alésage 60, cette extension radiale présentant un épaulement 72 tourné vers l'avant. L'épaulement 72 a un diamètre extérieur légèrement inférieur à celui de la partie arrière 64 de l'alésage étagé 60. Entre cet épaulement 72 et la rondelle élastique annulaire 68 est disposée une rondelle élastique annulaire intermédiaire 74. La rondelle élastique intermédiaire 74 a un bord périphérique extérieur de diamètre égal à celui de l'épaulement 72, et un bord périphérique intérieur de diamètre légèrement supérieur à celui de la face avant du plongeur 32. Dans la position de repos représentée sur la Figure 3, cette rondelle intermédiaire 74 est libre de se déplacer entre la rondelle 68 et l'épaulement 72.

Le servomoteur ainsi décrit fonctionne de la façon suivante : au repos, les pièces occupent la position représentée sur la Figure 3, la rondelle 68 en appui à la fois sur le disque de réaction 58 et sur l'épaulement 66 du piston 20 et le palpeur 32 légèrement en retrait par rapport à la face arrière du disque de réaction 58. La distance entre la face avant du plongeur et la face arrière du disque de réaction détermine, comme on l'a vu plus haut, la valeur du saut du servomoteur.

Les phases de fonctionnement correspondant aux segments OA et AB de la Figure 4 sont identiques à celles d'un servomoteur classique telles qu'on les a expliquées en référence à la Figure 2. La seule différence réside dans le fait que, dans la phase d'assistance, c'est-à-dire au-delà du point B sur la Figure 4, le disque de réaction 58 est au contact du plongeur 32, mais aussi de la rondelle élastique annulaire 68. L'effort d'assistance engendré par la différentielle de pression sur les deux faces de la jupe 14 est transmis par le piston 20, via l'épaulement 66, à la rondelle annulaire 68, et de là au disque de réaction 58. La rondelle annulaire 68 joue donc le rôle de la face avant annulaire 20b du piston 20 du servomoteur de la Figure 1, pour transmettre l'effort d'assistance du piston 20 vers le disque de réaction 58 et la tige de poussée 56.

De cette façon, ainsi qu'on le voit sur la Figure 4, à tout accroissement de l'effort d'entrée Fe au-delà du point B correspond un accroissement de l'effort d'assistance engendrant un effort de sortie Fs accru.

L'effort d'assistance étant transmis du piston 20 au disque de réaction 58 par l'intermédiaire de la rondelle élastique 68, celle-ci va, au cours de cet accroissement, supporter elle-même une contrainte croissante. Elle va donc se déformer progressivement et "s'aplatir", c'est-à-dire que son demi-angle au sommet va tendre vers 90°, c'est-à-dire encore que son bord périphérique intérieur va se rapprocher de l'épaulement 72 formé sur le plongeur 32.

Selon l'invention, la rondelle élastique 68 est choisie pour que, au-delà d'une certaine contrainte exercée sur elle, c'est-à-dire pour un effort d'assistance donné ou encore pour un effort de sortie de valeur prédéterminée, elle occupe une position active dans laquelle elle entre en contact avec la rondelle intermédiaire 74 et fait venir cette dernière en contact avec l'épaulement 72 formé sur le plongeur 32. Cet effort de sortie de valeur prédéterminée correspond au point D sur la Figure 4.

Au-delà du point D sur la Figure 4, on comprend donc que le plongeur 32, et par conséquent la tige de commande 34, est soumis à la réaction exercée par la tige de poussée 56 d'une part par sa face avant, et d'autre part par son épaulement 72 en appui sur la rondelle intermédiaire 74 elle-même en appui sur la rondelle élastique 68 dont toute la surface avant est en contact avec le disque de réaction 58. Il y a donc une augmentation artificielle de la surface du plongeur 32 coopérant avec le disque de réaction 58, et donc une diminution du rapport d'amplification du servomoteur. Ceci se traduit alors par une phase d'assistance où une augmentation de l'effort d'entrée engendre une augmentation de l'effort d'assistance inférieure à celle qui avait lieu avant que les rondelles 68 et 74 n'entrent en contact. Il en résulte ainsi, comme on l'a représenté sur la Figure 4, une courbe représentant la variation de l'effort de sortie en fonction de l'effort d'entrée dont la pente est inférieure à celle qui existait auparavant, et qui correspond au segment DE.

Le fonctionnement du servomoteur se poursuit dans ces conditions à mesure de l'augmentation de l'effort d'entrée, jusqu'à ce que la pression régnant dans la chambre arrière 18 du servomoteur soit égale à la pression atmosphérique, moment auquel on atteint la saturation du servomoteur. La courbe de fonctionnement du servomoteur reprend alors l'allure qu'elle avait pour un servomoteur classique, c'est-à-dire celle qu'elle avait au-delà du point C sur la Figure 2.

On voit donc qu'on a réalisé conformément à l'invention un servomoteur dont la face avant annulaire du piston, coopérant avec le disque de réaction, est constituée par une rondelle annulaire élastique, qui se déforme entre une position de repos et une position active lorsque l'effort de sortie, et corrélativement l'effort d'entrée, dépasse une valeur prédéterminée, pour faire alors intervenir une rondelle élastique intermédiaire modifiant le rapport d'amplification du servomoteur. De la sorte, le passage du point de saturation est rendu plus progressif, ainsi qu'on le voit sur la Figure 4, où le passage par le point C est évité, et remplacé par le segment intermédiaire DE.

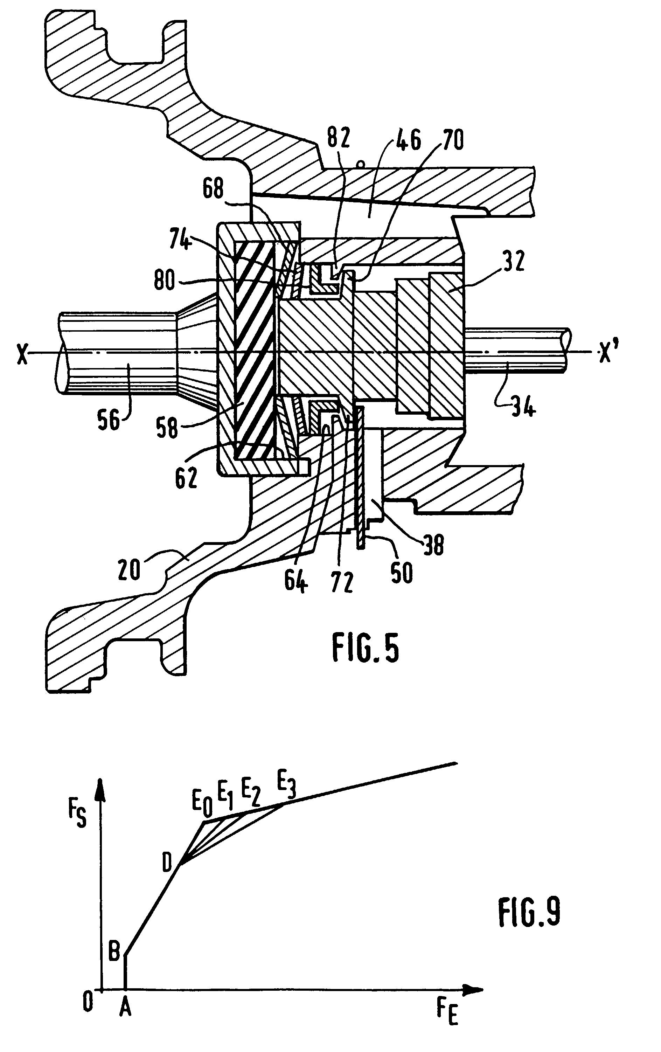

On a représenté sur la Figure 5 une variante du mode de réalisation de la Figure 3. Selon cette variante, une rondelle rigide 80 a été intercalée entre la rondelle élastique intermédiaire 74 et l'épaulement 72 du plongeur. Le servomoteur ainsi réalisé a un fonctionnement identique à celui de la Figure 3, et ne sera pas repris en détail. Durant la phase d'assistance correspondant au segment BD de la Figure 4, le disque de réaction 58 coopère avec la face avant du plongeur 32 et avec la rondelle élastique annulaire 68, tandis que la rondelle intermédiaire 74 et la rondelle rigide 80 sont libres de toute contrainte. Après que la rondelle élastique annulaire 68 se soit déformée, elle vient solliciter la rondelle intermédiaire 74 qui vient en butée sur la rondelle rigide 80, elle-même en appui sur l'épaulement 72 du plongeur. On se trouve alors dans la phase d'assistance réduite correspondant au segment DE de la Figure 4.

L'avantage de ce mode de réalisation réside dans le fait qu'il est possible de réaliser sur le piston 20 un épaulement 82 dirigé vers l'arrière. En fonctionnement normal, cet épaulement 82 ne joue aucun rôle particulier. En cas de défaillance de la source de dépression, où aucune assistance ne peut être fournie par le servomoteur, l'épaulement 72 du plongeur viendra coopérer avec l'épaulement 82 du piston pour faire avancer ce dernier, et ainsi rendre le freinage possible sans endommager le servomoteur.

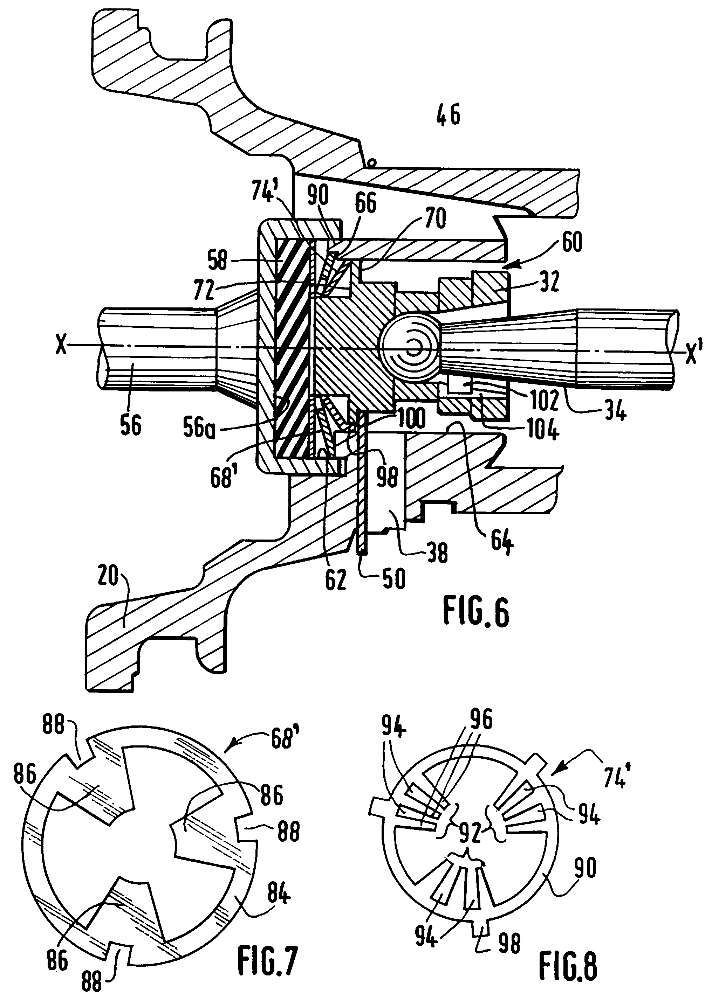

On a représenté sur la Figure 6 une autre variante du mode de réalisation de la Figure 3, qui permet de façon supplémentaire d'ajuster le gain du servomoteur de l'invention, en faisant varier la raideur des rondelles élastiques annulaires disposées entre le piston 20, le plongeur 32 et le disque de réaction 58.

A cet effet, la rondelle élastique disposée vers l'avant à la forme de la rondelle 68' représentée en plan à la Figure 7. La rondelle 68' comporte une couronne périphérique 84, de diamètre extérieur égal à celui du disque de réaction 58, et des secteurs 86 s'étendant radialement vers l'intérieur à partir de cette couronne 84, et régulièrement répartis le long de la couronne. Ces secteurs 86 sont tronqués circulairement à leur sommet, selon un cercle de diamètre légèrement supérieur à celui de la face avant du plongeur 32. Des encoches 88 sont formées à la périphérie extérieure de la couronne 84, et sont destinées à coopérer avec des doigts 90 formés sur l'épaulement 66 et s'étendant vers l'avant. La rondelle 68' est ainsi solidaire en rotation du piston 20.

La rondelle élastique intermédiaire à la forme de la rondelle 74' représentée en plan à la Figure 8. La rondelle 74' comporte une couronne périphérique 90 de diamètre extérieur égal à celui de l'épaulement 72 du plongeur 32, et des secteurs 92 s'étendant radialement vers l'intérieur à partir de cette couronne 90, et régulièrement répartis le long de la couronne. Les secteurs 92 sont tronqués circulairement à leur sommet, selon un cercle de diamètre légèrement supérieur à celui de la face avant du plongeur 32.

Des échancrures 94 sont pratiquées dans les secteurs 92 de façon à ce que ceux-ci soient en fait formés de doigts 96 identiques et en nombre égal à celui des échancrures 94 augmenté d'une unité.

Des pattes 98 sont formées à la périphérie extérieure de la couronne 90, et sont ensuite repliées selon un angle sensiblement droit de façon à s'étendre axialement vers l'arrière pour pénétrer dans des encoches 100 formées à la périphérie extérieure de l'épaulement 72 du plongeur 32. La rondelle intermédiaire 74' est ainsi solidaire en rotation du plongeur 32.

Enfin, la tige de commande 34 est pourvue à son extrémité antérieure d'un ergot radial 102 pénétrant dans un logement radial 104 formé dans le plongeur 32, de façon à rendre la tige de commande 34 et le plongeur 32 solidaires en rotation.

Les secteurs 86 et 92 ont le même angle au sommet, et sont en nombre n égal, supérieur ou égal à deux (trois dans l'exemple représenté). Les secteurs 92 sont identiques entre eux et comportent le même nombre m de doigts, supérieur ou égal à un (trois dans l'exemple représenté).

D'après les explications qui précèdent, on aura compris que, sur un servomoteur totalement assemblé, en faisant tourner la tige de commande 34 autour de son axe XX', le piston 20 restant fixe en rotation dans le servomoteur, on changera la position angulaire relative des rondelles 68' et 74'. Chaque secteur 86 de la rondelle 68' pourra ainsi être en alignement axial avec un nombre variable de doigts 96 de la rondelle 74', et même avec aucun si les secteurs 92 de la rondelle 74' sont en alignement axial avec les espaces libres entre les secteurs 86 de la rondelle 68'. Il y a donc m + 1 positions angulaires relatives possibles entre les rondelles 68' et 74' (quatre dans l'exemple représenté).

Le fonctionnement du servomoteur représenté sur la Figure 6 est identique celui du servomoteur représenté sur la Figure 3, et est schématisé par une courbe du type de la Figure 4. Les phases de fonctionnement correspondant aux segments OA et AB de la Figure 6 sont identiques à celles d'un servomoteur classique telles qu'on les a expliquées en référence à la Figure 2.

Cependant, à chaque position angulaire relative des rondelles 68' et 74' correspond une courbe caractéristique. En effet, un changement des positions relatives entre les rondelles élastiques 68' et 74' se traduit par un changement de la raideur de l'ensemble.

Comme on l'a vu plus haut, la position du point D sur la Figure 9 est déterminée par la raideur de la rondelle 68'. Si les secteurs 92 de la rondelle 74' sont en alignement axial avec les espaces libres entre les secteurs 86 de la rondelle 68', une fois que cette dernière s'est "aplatie", c'est-à-dire au delà du point D sur la Figure 9, la rondelle 74' est inactive, et le fonctionnement du servomoteur correspond au segment DEₒ, le point Eₒ correspondant au point C de la Figure 2. On obtient donc un servomoteur de fonctionnement classique.

Par contre, en fonction du nombre de doigts 96 des secteurs 92 de la rondelle 74' en alignement axial avec les secteurs 86 de la rondelle 68', la raideur de la rondelle 74' sera plus ou moins importante, et le fonctionnement du servomoteur se traduira dans l'exemple représenté, par les segments DE₁ si un seul doigt 96 est sollicité, DE₂ si deux doigts 96 sont sollicités, et DE₃ si les secteurs 92 et 86 sont en alignement axial parfait.

On voit donc que, sur un servomoteur totalement assemblé et installé sur un véhicule, il est possible, par une opération simple, de choisir à volonté le mode de passage du point de saturation, pour qu'il corresponde à celui d'un servomoteur classique, ou qu'il soit plus ou moins progressif.

On pourra prévoir sur la tige de commande 34 un dispositif d'indication de la position angulaire de celle-ci par rapport au piston 20, et plus particulièrement par rapport à la partie arrière tubulaire 22 du piston, de même qu'un système de verrouillage angulaire de la tige de commande 34 dans la partie tubulaire 22, permettant le fonctionnement du montage rotulant de la tige 34 dans le plongeur 32. Le servomoteur représenté sur la Figure 6 pourra également être réalisé selon la variante de la Figure 5, c'est-à-dire avec une rondelle rigide 80.

Bien entendu, l'invention n'est pas limitée aux modes de réalisation qui ont été décrits, et est susceptible de recevoir de nombreuses variantes qui entrent dans son cadre. C'est ainsi par exemple qu'on pourra réaliser le disque de réaction avec une face arrière concave, présentant une partie périphérique tronconique et une partie centrale plane, de façon à ce que, au repos, la face avant annulaire élastique du piston soit au contact sur toute sa surface avec le disque de réaction.

On pourra également disposer une rondelle annulaire rigide 106 sur la face arrière du disque de réaction, comme on l'a représenté sur la Figure 6.

## Revendications

1. Servomoteur pneumatique d'assistance au freinage comportant une enveloppe (10) à l'intérieur de laquelle se trouve un piston (20) formé d'une partie tubulaire arrière (22) supportant une jupe (14) et qui, à l'aide d'une membrane déroulante (12), définit une chambre avant (16) reliée en permanence à une source de dépression et une chambre arrière (18) reliée sélectivement à la chambre avant (16) ou à l'atmosphère par un moyen de valve (40) actionné par une tige de commande (34) susceptible de s'appuyer, par l'intermédiaire de la face avant d'un plongeur (32), sur une première face d'un disque de réaction (58) solidaire par une deuxième face d'une tige de poussée (56), le piston (20) étant en appui sur le disque de réaction (58) par une face avant annulaire élastique (68, 68'), déformable entre une position de repos et une position active, la face avant annulaire (68, 68') du piston (20) étant placée dans sa position active lorsque la tige de poussée (56) exerce sur le disque de réaction (58) un effort supérieur à une valeur prédéterminée, caractérisée en ce que la face avant annulaire (68, 68') du piston (20) est constituée par une rondelle élastique annulaire (68, 68'), en appui par son bord périphérique extérieur sur un épaulement (66) du piston (20) et sur le disque de réaction (58), et en ce qu'un élément élastique intermédiaire (74, 74') est disposé entre la face avant annulaire (68, 68') du piston (20) et le plongeur (32).

2. Servomoteur selon la revendication 1, caractérisé en ce que l'élément élastique intermédiaire (74, 74') est en contact avec le plongeur (32) et la face avant annulaire (68, 68') du piston (20) lorsque cette dernière est dans sa position active.

3. Servomoteur selon la revendication 2, caractérisé en ce que l'élément élastique intermédiaire (74, 74') est constitué par une seconde rondelle élastique annulaire (74, 74').

4. Servomoteur selon la revendication 1, caractérisé en ce que le diamètre du bord périphérique intérieur de la rondelle élastique annulaire (68, 68') est légèrement supérieur à celui de la face avant du plongeur (58), et en ce que le diamètre du bord périphérique extérieur de la rondelle élastique annulaire (68, 68') est égal à celui du disque de réaction (58).

5. Servomoteur selon la revendication 4, caractérisé en ce que la rondelle élastique annulaire (68') comporte une couronne périphérique (84) et au moins deux secteurs (86) s'étendant radialement vers l'intérieur et tronqués circulairement à leur sommet.

6. Servomoteur selon la revendication 5, caractérisé en ce que la rondelle élastique annulaire (68') est solidaire en rotation du piston (20).

7. Servomoteur selon la revendication 3, caractérisé en ce que la seconde rondelle élastique annulaire (74') comporte une couronne périphérique (90) et au moins deux secteurs (92) s'étendant radialement vers l'intérieur et tronqués circulairement à leur sommet.

8. Servomoteur selon la revendication 7, caractérisé en ce que la seconde rondelle élastique (74') est solidaire en rotation du plongeur (32).

9. Servomoteur selon la revendication 8, caractérisé en ce que le plongeur (32) est solidaire en rotation de la tige de commande (34).

10. Servomoteur selon la revendication 9, caractérisé en ce qu'au moins une échancrure (94) est pratiquée dans chaque secteur (92) de la seconde rondelle élastique annulaire (74').

11. Servomoteur selon l'une quelconque des revendications précédentes, caractérisé en ce que le piston (20) est formé avec un alésage étagé (60), dont une partie avant (62) de plus grand diamètre reçoit le disque de réaction (58) et la rondelle élastique annulaire (68, 68'), et dont une partie arrière (64) de diamètre inférieur à celui de la partie avant (62) reçoit l'élément élastique intermédiaire (74, 74') et une extension radiale (70, 80) du plongeur (32) sur laquelle vient en contact l'élément élastique intermédiaire (74, 74') lorsque la face avant annulaire (68, 68') du piston (20) est dans sa position active.

12. Servomoteur selon la revendication 11, caractérisé en ce que l'extension radiale (80) du plongeur (32) est formée sur une rondelle rigide (80) qui vient en appui sur un épaulement (72) du plongeur lorsque la face avant annulaire (68, 68') du piston (20) est dans sa position active.

13. Servomoteur selon l'une quelconque des revendications précédentes, caractérisé en ce qu'une rondelle annulaire rigide (106) est disposée sur la face arrière du disque de réaction (58).

## Patentansprüche

1. Pneumatischer Bremsunterstützungs-Servomotor mit einem Gehäuse (10), in dessen Inneren sich ein Kolben (20) befindet, der durch einen eine Schürze (14) tragenden, rohrförmigen hinteren Teil (22) gebildet ist und mittels einer Abrollmembran (12) eine permanent mit einer Unterdruckquelle verbundene vordere Kammer (16) und eine hintere Kammer (18) bildet, die selektiv mit der vorderen Kammer (16) oder der Atmosphäre über ein Ventil (40) verbunden ist, das von einer Steuerstange (34) betätigt wird, die sich mittels der vorderen Seite eines Tauchkolbens (32) an einer ersten Seite einer Reaktionsscheibe (58) abstützen kann, die fest mit einer zweiten Seite einer Schubstange (56) verbunden ist, wobei sich der Kolben (20) an der Reaktionsscheibe (58) mittels einer elastischen ringförmigen vorderen Seite (68, 68') abstützt, die zwischen einer Ruhestellung und einer aktiven Stellung verformbar ist, wobei die ringförmige vordere Seite (68, 68') des Kolbens (20) in ihrer aktiven Stellung angeordnet ist, wenn die Schubstange (56) auf die Reaktionsscheibe (58) eine Kraft ausübt, die größer als ein vorbestimmter Wert ist, dadurch gekennzeichnet, daß die vordere ringförmige Seite (68, 68') des Kolbens (20) durch eine ringförmige elastische Scheibe (68, 68') gebildet ist, die mittels ihres Außenumfangsrandes an einem Absatz (66) des Kolbens (20) und an der Reaktionsscheibe (58) anliegt, und daß ein elastisches Zwischenelement (74, 74') zwischen der ringförmigen vorderen Seite (68, 68') des Kolbens (20) und dem Tauchkolben (32) angeordnet ist.

2. Servomotor nach Anspruch 1, dadurch gekennzeichnet, daß das elastische Zwischenelement (74, 74') den Tauchkolben (32) und die ringförmige vordere Seite (68, 68') des Kolbens (20) berührt, wenn dieser sich in seiner aktiven Stellung befindet.

3. Servomotor nach Anspruch 2, dadurch gekennzeichnet, daß das elastische Zwischenelement (74, 74') durch eine zweite ringförmige elastische Scheibe (74, 74') gebildet ist.

4. Servomotor nach Anspruch 1, dadurch gekennzeichnet, daß der Durchmesser des Innenumfangsrandes der ringförmigen elastischen Scheibe (68, 68') geringfügig größer als derjenige der vorderen Seite des Tauchkolbens (58) ist, und daß der Durchmesser des Außenumfangsrandes der ringförmigen elastischen Scheibe (68, 68') gleich demjenigen der Reaktionsscheibe (58) ist.

5. Servomotor nach Anspruch 4, dadurch gekennzeichnet, daß die ringförmige elastische Scheibe (68') einen Umfangsring (84) und wenigstens zwei Sektoren (86) aufweist, die sich radial nach innen erstrecken und an ihren Scheiteln kreisförmig abgeschnitten sind.

6. Servomotor nach Anspruch 5, dadurch gekennzeichnet, daß die ringförmige elastische Scheibe (68') drehfest mit dem Kolben (20) verbunden ist.

7. Servomotor nach Anspruch 3, dadurch gekennzeichnet, daß die zweite ringförmige elastische Scheibe (74') einen Umfangsring (90) und wenigstens zwei Sektoren (92) aufweist, die sich radial nach innen erstrecken und an ihren Scheiteln kreisförmig abgeschnitten sind.

8. Servomotor nach Anspruch 7, dadurch gekennzeichnet, daß die zweite elastische Scheibe (74') drehfest mit dem Tauchkolben (32) verbunden ist.

9. Servomotor nach Anspruch 8, dadurch gekennzeichnet, daß der Tauchkolben (32) drehfest mit der Steuerstange (34) verbunden ist.

10. Servomotor nach Anspruch 9, dadurch gekennzeichnet, daß in jedem Sektor (92) der zweiten ringförmigen elastischen Scheibe (74') wenigstens ein Einschnitt (94) gebildet ist.

11. Servomotor nach einem der vorhergehenden Ansprüche, dadurch gekennzeichnet, daß der Kolben (20) mit einer Stufenbohrung (60) gebildet ist, deren vorderer Abschitt (62) mit größerem Durchmesser die Reaktionsscheibe (58) und die ringförmige elastische Scheibe (68, 68') aufnimmt und deren hinterer Abschnitt (64) mit kleinerem Durchmesser als der vordere Abschnitt (62) das elastische Zwischenelement (74, 74') und einen radialen Fortsatz (70, 80) des Tauchkolbens (32) aufnimmt, mit dem das elastische Zwischenelement (74, 74') in Berührung gelangt, wenn die ringförmige vordere Seite (68, 68') des Kolbens (20) sich in ihrer aktiven Stellung befindet.

12. Servomotor nach Anspruch 11, dadurch gekennzeichnet, daß der radiale Fortsatz (80) des Tauchkolbens (32) an einer starren Scheibe (80) gebildet ist, die an einem Absatz (72) des Tauchkolbens in Anlage gelangt, wenn die ringförmige vordere Seite (68, 68') des Kolbens (20) sich in ihrer aktiven Stellung befindet.

13. Servomotor nach einem der vorhergehenden Ansprüche, dadurch gekennzeichnet, daß auf der hinteren Seite der Reaktionsscheibe (58) eine starre ringförmige Scheibe (106) angeordnet ist.

## Claims

1. Pneumatic brake-booster comprising a casing (10) inside which is a piston (20) formed of a back tubular part (22) supporting a skirt (14) and which, with the aid of an unrolling membrane (12), defines a front chamber (16) connected permanently to a source of partial vacuum and a back chamber (18) connected selectively to the front chamber (16) or to the atmosphere via a valve means (40) actuated by a control rod (34) capable of bearing, through the intermediary of the front face of a plunger (32), against a first face of a reaction disk (58) securely attached through a second face to a thrust rod (56), the piston (20) bearing against the reaction disk (58) through a resilient annular front face (68, 68'), deformable between a rest position and an active position, the annular front face (68, 68') of the piston (20) being placed in its active position when the thrust rod (56) exerts on the reaction disk (58) a force greater than a pre-determined value, characterized in that the annular front face (68, 68') of the piston (20) is constituted by an annular resilient washer (68, 68') bearing through its outer peripheral edge against a step (66) of the piston (20) and against the reaction disk (58), and in that an intermediate resilient member (74, 74') is disposed between the annular front face (68, 68') of the piston 20 and the plunger (32).

2. Booster according to Claim 1, characterized in that the intermediate resilient member (74, 74') is in contact with the plunger (32) and the annular front face (68, 68') of the piston (20) when the latter is in its active position.

3. Booster according to Claim 2, characterized in that the intermediate resilient member (74, 74') is constituted by a second annular resilient washer (74, 74').

4. Booster according to Claim 1, characterized in that the diameter of the inner peripheral edge of the annular resilient washer (68, 68') is slightly greater than that of the front face of the plunger (58), and in that the diameter of the outer peripheral edge of the annular resilient washer (68, 68') is equal to that of the reaction disk (58).

5. Booster according to Claim 4, characterized in that the annular resilient washer (68') comprises a peripheral ring (84) and at least two sectors (86) extending radially inwards and truncated circularly at their tips.

6. Booster according to Claim 5, characterized in that the annular resilient washer (68') is locked in rotation to the piston (20).

7. Booster according to Claim 3, characterized in that the second annular resilient washer (74') comprises a peripheral ring (90) and at least two sectors (92) extending radially inwards and truncated circularly at their tips.

8. Booster according to Claim 7, characterized in that the second resilient washer (74') is locked in rotation to the plunger (32).

9. Booster according to Claim 8, characterized in that the plunger (32) is locked in rotation to the control rod (34).

10. Booster according to Claim 9, characterized in that at least one cut-out (94) is made in each sector (92) of the second annular resilient washer (74').

11. Booster according to any of the preceding claims, characterized in that the piston (20) is formed with a stepped bore (60), of which a front part (62) of greater diameter, receives the reaction disk (58) and the annular resilient washer (68, 68'), and of which a back part (64) of diameter smaller than that of the front part (62) receives the intermediate resilient member (74', 74' ) and a radial extension (70, 80) of the plunger (32) against which the intermediate resilient member (74, 74') comes into contact when the annular front face (68, 68') of the piston (20) is in its active position.

12. Booster according to Claim 11, characterized in that the radial extension (80) of the plunger (32) is formed on a rigid washer (80) which comes to bear against a step (72) of the plunger when the annular front face (68, 68') of the piston (20) is in its active position.

13. Booster according to any of the preceding claims, characterized in that a rigid annular washer (106) is disposed on the back face of the reaction disk (58).
